# EUROPEAN PATENT APPLICATION

(11) **EP 4 529 245 A1**
(43) Date of publication of application: **26.03.2025**
(21) Application number: 24197840.2
(22) Date of filing: 02.09.2024
(51) Int. Cl.: H04W 8/24

(54) **INDICATION OF UE CAPABILITY USAGE**

(30) Priority: 21.09.2023 US 202363539720 P
(71) Applicant: Nokia Technologies Oy, 02610 Espoo (FI)
(72) Inventor: HENTTONEN, Tero, Espoo (FI); KOSKINEN, Jussi-Pekka, Oulu (FI); TURTINEN, Samuli Heikki, Ii (FI)
(74) Representative: Nokia EPO representatives

(57) **Abstract**

An apparatus configured to: determine whether to ignore a capability filter, wherein the capability filter defines a set of frequency bands for reporting a capability information message; and transmit, to a network node in response to the determining, an indication of whether the apparatus has determined to ignore the capability filter. An apparatus configured to: transmit, to a user equipment, a user equipment capability enquiry, wherein the user equipment capability enquiry comprises, at least, a capability filter defining a set of frequency bands for reporting a capability information message; receive, from the user equipment, an indication of whether the user equipment has determined to ignore the capability filter; and determine, whether to request at least one additional capability from the user equipment based, at least partially, on the indication.

## Description

### TECHNICAL FIELD

The example and non-limiting embodiments relate generally to capability information reporting and, more particularly, to use of a capability filter.

### BACKGROUND

It is known, in network communication, to indicate, to a UE, a set of frequency bands for reporting UE capability. This may be known as a capability request filter where instead of all, only the set of frequency bands are specified for which the UE capability is to be reported.

### SUMMARY

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: determine whether to ignore a capability filter, wherein the capability filter defines a set of frequency bands for reporting a capability information message; and transmit, to a network node in response to the determining, an indication of whether the apparatus has determined to ignore the capability filter.

In accordance with one aspect, a method comprising: determining, with a user equipment, whether to ignore a capability filter, wherein the capability filter defines a set of frequency bands for reporting a capability information message; and transmitting, to a network node in response to the determining, an indication of whether the user equipment has determined to ignore the capability filter.

In accordance with one aspect, an apparatus comprising means for: determining whether to ignore a capability filter, wherein the capability filter defines a set of frequency bands for reporting a capability information message; and transmitting, to a network node in response to the determining, an indication of whether the apparatus has determined to ignore the capability filter.

In accordance with one aspect, a non-transitory computer-readable medium comprising program instructions stored thereon for performing at least the following: determining whether to ignore a capability filter, wherein the capability filter defines a set of frequency bands for reporting a capability information message; and causing transmitting, with a user equipment to a network node in response to the determining, an indication of whether the user equipment has determined to ignore the capability filter.

In accordance with one aspect, an apparatus comprising: at least one processor; and at least one memory storing instructions that, when executed by the at least one processor, cause the apparatus at least to: transmit, to a user equipment, a user equipment capability enquiry, wherein the user equipment capability enquiry comprises, at least, a capability filter defining a set of frequency bands for reporting a capability information message; receive, from the user equipment, an indication of whether the user equipment has determined to ignore the capability filter; and determine, whether to request at least one additional capability from the user equipment based, at least partially, on the indication.

In accordance with one aspect, a method comprising: transmitting, with a base station to a user equipment, a user equipment capability enquiry, wherein the user equipment capability enquiry comprises, at least, a capability filter defining a set of frequency bands for reporting a capability information message; receiving, from the user equipment, an indication of whether the user equipment has determined to ignore the capability filter; and determining, whether to request at least one additional capability from the user equipment based, at least partially, on the indication.

In accordance with one aspect, an apparatus comprising means for: transmitting, to a user equipment, a user equipment capability enquiry, wherein the user equipment capability enquiry comprises, at least, a capability filter defining a set of frequency bands for reporting a capability information message; receiving, from the user equipment, an indication of whether the user equipment has determined to ignore the capability filter; and determining, whether to request at least one additional capability from the user equipment based, at least partially, on the indication.

In accordance with one aspect, a non-transitory computer-readable medium comprising program instructions stored thereon for performing at least the following: transmitting, to a user equipment, a user equipment capability enquiry, wherein the user equipment capability enquiry comprises, at least, a capability filter defining a set of frequency bands for reporting a capability information message; receiving, from the user equipment, an indication of whether the user equipment has determined to ignore the capability filter; and determining, whether to request at least one additional capability from the user equipment based, at least partially, on the indication.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a flowchart illustrating steps as described herein; and
FIG. 3 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AMF: access and mobility management function
- BB: baseband
- CA: carrier aggregation
- CC: component carrier
- cRAN: cloud radio access network
- CU: central unit
- DC: dual connectivity
- DL: downlink
- DRX: discontinuous reception
- DU: distributed unit
- eDRX: enhanced discontinuous reception
- eMBB: enhanced mobile broadband
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- FDD: frequency division duplex
- gNB (or gNodeB): base station for 5G/NR, i.e., a node providing NR user plane and control plane protocol terminations towards the UE, and connected via the NG interface to the 5GC
- HD-FDD: half-duplex frequency division duplex
- I/F: interface
- IoT: Internet of Things
- L1: layer 1
- LPWA: low power wide area
- LTE: long term evolution
- MAC: medium access control
- MME: mobility management entity
- ng or NG: new generation
- ng-eNB or NG-eNB: new generation eNB
- NR: new radio
- N/W or NW: network
- O-RAN: open radio access network
- PDCP: packet data convergence protocol
- PDSCH: physical downlink shared channel
- PHY: physical layer
- PUSCH: physical uplink shared channel
- QAM: quadrature amplitude modulation
- RAN: radio access network
- RedCap: reduced capability
- RF: radio frequency
- RLC: radio link control
- RRC: radio resource control
- RRH: remote radio head
- RS: reference signal
- RU: radio unit
- Rx: receiver
- SCS: subcarrier spacing
- SDAP: service data adaptation protocol
- SGW: serving gateway
- SMF: session management function
- SN: secondary node
- Tx: transmitter
- UE: user equipment (e.g., a wireless, typically mobile device)
- UL: uplink
- UPF: user plane function
- VNR: virtualized network function

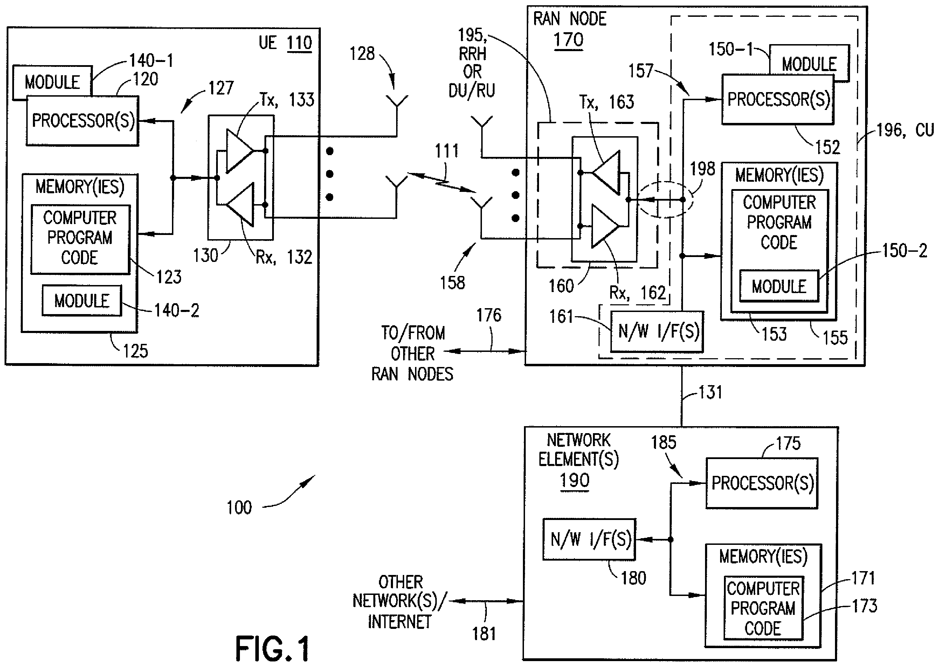

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to reduced capability (RedCap) NR devices. RedCap devices have reduced capabilities versus NR enhanced mobile broadband (eMBB) capable UEs, as they are targeted to serve in IoT like scenarios, applying UE complexity reduction, and hence neither support of carrier aggregation (CA) nor or dual connectivity (DC) is mandated. RedCap UEs may have reduced capabilities such as: bandwidth (BW) of 20 MHz for frequency range 1 (FR1), BW of 50 or 100 MHz for frequency range 2 (FR2), reduced number of antennas (e.g. 1Tx antenna, 1 or 2 Rx antenna depending on FR and band), limited peak data rates, restricted modulation levels (e.g. 64 quadrature amplitude modulation (QAM) in downlink (DL) and 16-QAM in uplink (UL)) and/or optional half-duplex frequency division duplex (FDD). RedCap devices may include devices with relatively low complexity, cost, and/or size. Use cases for RedCap UE and example embodiments of the present disclosure may include, but are not limited to, industrial Internet of Things (IoT) sensors, wireless sensors, video surveillance devices, Internet of Things (IoT) devices, wearables, and/or devices used for transportation, tracking, infrastructure, agriculture, smart cities, etc. Wearables may include sensors in contact with or near skin, smart fabric, heart rate monitors, temperature monitors, etc. RedCap UEs might only deploy the minimum number of RF chains (i.e. single RF chain).

RAN has agreed to a work item on enhanced support of reduced capability NR devices with the following justification and objectives:
"...Justification
One 5G aim is to accelerate industrial transformation and digitalization, which improve flexibility, enhance productivity and efficiency, reduce maintenance, and improve operational safety. Industrial sensors play an important role for realizing such a vision. Not only widely used in industrial automation and digitalization use cases, industrial sensors are also widely used in the general environmental monitoring use cases such as monitoring of critical infrastructure (e.g., buildings, bridges, water dams, etc.) or monitoring for natural disasters (e.g., wild fire, flood, tsunami, earthquake, etc.).
Another emerging new class of new 5G use cases is the smart city vertical, which covers data collection and processing to more efficiently monitor and control city resources, and to provide services to city residents. Especially, the deployment of surveillance cameras is an essential part of the smart city but also of factories and industries.
Furthermore, there have been increasing interests in wearables use cases such as smart watches, eHealth related devices, and medical monitoring devices. These use cases call for different design considerations and have different requirements in terms of form factor, UE complexity and energy efficiency, compared to eMBB devices.
The support of industrial sensors, video surveillance, and wearables were the motivations behind Rel-17 RedCap. Through the Rel-17 NR RedCap work item, 3GPP has established a framework for enabling reduced capability NR devices suitable for a range of use cases, including the industrial sensors, video surveillance, and wearables use cases, with requirements on low UE complexity and sometimes also on low UE power consumption.
To further expand the market for RedCap use cases with relatively low cost, low energy consumption, and low data rate requirements, e.g., industrial wireless sensor network use cases, some further complexity reduction enhancements should be considered.
Rel-18 RedCap should provide NR support for low-tier devices between existing LPWA UEs and the capabilities of Rel-17 RedCap UEs. The supported peak data rate for Rel-18 RedCap targets to 10Mbps. Rel-18 RedCap should not overlap with existing LPWA solutions.
The enhancements should be introduced while maintaining the integrity of the RedCap ecosystem and maximizing the benefit of economies of scale. The WI targets enhancements applicable to the RedCap framework defined in Rel-17, including principles of network awareness of device capabilities.
Techniques for further UE complexity reduction have been studied in the study item documented in TR 38.865..."
and objectives:
"...Obj ective
The objective is to specify support for the following enhancements:
   **Power saving/energy efficiency enhancements**
      Enhanced eDRX in RRC_INACTIVE (>10.24s) [RAN2, RAN3, RAN4]
      Note that this objective requires SA2, CT1 and CT4 involvement
   Complexity/cost reduction
      Further reduced UE complexity in FR1 [RAN1, RAN2, RAN4]
      UE BB bandwidth reduction
         5 MHz BB bandwidth only for PDSCH (for both unicast and broadcast) and PUSCH, with 20 MHz RF bandwidth for UL and DL
         The other physical channels and signals are still allowed to use a BWP up to the 20 MHz maximum UE RF+BB bandwidth.
         Support additional separate early indication(s) [RAN1, RAN2]
      UE peak data rate reduction
         Relaxation of the constraint (v_{Layers}·Qm·f ≥ 4) for peak data rate reduction
         The relaxed constraint is, e.g., 1 (instead of 4).
         The parameters (v_{Layers}, Qₘ, f) can be as in Rel-17 RedCap.
      Both 15 kHz SCS and 30 kHz SCS are supported.
      Aim to define at most one Rel-18 RedCap UE type for further UE complexity reduction.
      The existing UE capability framework is used, and changes to capability signalling are specified only if necessary. By default, all UE capabilities applicable to a Rel-17 RedCap UE are applicable unless otherwise specified.
   Notes:
      The work defined as part of this WI is not to overlap with LPWA use cases.
      Coexistence with non-RedCap UEs and Rel-17 RedCap UEs should be ensured.
      This WI considers all applicable duplex modes unless otherwise specified.
   Check in RAN#99 regarding:
      Whether UE peak data rate reduction for UE is limited only with UE BB bandwidth reduction or standalone..."

Example embodiments of the present disclosure are not limited to RedCap NR UEs; example embodiments of the present disclosure may also be applicable to other NR devices.

Features as described herein may generally relate to capability filtering. A capability filter may define a set of frequency bands that a network requests a UE to report on, for example in UE capability information message (e.g. frequencyBandListFilter). In TS 38.331, it may be mandatory for both the UE and the NW to support the capability filter. However, in some scenarios, a UE may ignore a capability filter (e.g. even though the UE is capable of supporting it). In other words, a UE may include all supported bands when transmitting the UE capability information message, regardless of which bands were requested by the NW in the capability filter; the UE may consider the UE capability filter as optional.

It may be noted that not all UE may be capable of determining whether to ignore a capability filter.

Features as described herein may generally relate to RRC procedures. The current RRC specification defines the processing delay requirements for RRC procedures. The performance requirement is expressed as the time from the reception of the DL RRC message to the time the UE shall be ready for the reception of uplink grant for the UL RRC response message. Among different RRC procedures, the delay requirement for the UE capability transfer procedure is 80ms, whereas the delay requirement for the simplest RRC reconfiguration procedure is 10ms.

The rationale for such delay requirement is coming from the fact that the UE capability transfer procedure involves "UE capability filtering". That is, the UE is required to tailor the content of reported UE capability according to the filter signaled by the network (e.g. a list of frequency bands on which the UE is requested to report UE capability). This procedure requires high demand on the processing and memory in the UE since it is something the UE has to do based on network configuration; hence the long processing delay being allowed for the UE capability enquiry/request.

The UE capability filtering feature was originally meant to address the growing UE capability size due to carrier aggregation (CA), and to make sure the total UE capability size fits within the maximum PDCP SDU size (9000 bytes) . In case of eRedCap however, the assumption is that the UE supports only single component carrier (CC) operation.

Some reduced capability UEs are not able to perform such capability filtering in a timely manner, and the RRC processing delay requirements may not be met. Defining different RRC processing delay requirements for different UEs would not be desirable since the NW would need to schedule different UEs in different manners. Also, specifying even longer processing times for the capability transfer would delay the RRC establishment even further and would consume more UE battery.

However, the UE ignoring the capability filter may create issues in the NW and increase required signaling also for the UE. For example, the NW may send a further request for UE capabilities for different frequency band(s) as previously requested.

In other words, the NW may provide, to the UE, a mandatory capability filter; the capability filter may always be provided to the UE. However, the UE may determine to ignore the capability filter even though it has been indicated to be mandatory; the NW belief that the capability filter will be complied with may be mistaken. In an example embodiment, the UE may indicate, to the NW, that the capability filter has been/is to be ignored, or not complied with. A technical effect of example embodiments of the present disclosure may be to avoid issues (e.g. bands the NW believes are being used by the UE are not being used) that may arise from the NW believing that the capability filter is being complied with, when in actuality it is being ignored by the UE.

In an example embodiment, a UE may determine whether to ignore, or comply with, a capability filter. If the UE determines to ignore the capability filter, the UE may assume the frequency band list filter to be the filter containing all the supported bands of the UE, or at least a subset of the supported bands of the UE. If the UE determines to ignore the capability filter, the UE may not compile a list of candidate band combinations according to filter criteria (e.g. in capability RequestFilterCommon, if included) For example, the compiled list of candidate band combinations may be at least partially incompatible with the filter criteria. If the UE determines to ignore the capability filter, the UE may compile a list of candidate band combinations different than the filter criteria. For example, the UE may compile a list of candidate band combinations that includes bands that are not included in the capability filter (e.g. unrequested bands). For example, the UE may compile a list of candidate band combinations that does not include bands that are included in the capability filter.

In an example embodiment, the UE may inform the NW of whether the UE uses/used or does/did not use the capability filter. For example, the UE may use, not use, support, not support, accept, or deny/ignore the capability filter. In an example embodiment, this information is included in the UE capability information message by the UE. In another example embodiment, this information may be included in the UE capability information message by the UE only if the NW included a capability filter in the UE capability enquiry/request. It may be noted that a capability enquiry may not be made unless a capability filter has (previously) been provided to the UE.

In an example embodiment, the UE may indicate, to the NW, that it supports use of the capability filter. In an example embodiment, the UE may indicate, to the NW, that it does not support use of the capability filter. In an example embodiment, the UE may indicate, to the NW, that it uses the capability filter. In an example embodiment, the UE may indicate, to the NW, that it does not use the capability filter. In an example embodiment, the UE may indicate, to the NW, that it has previously used the capability filter. In an example embodiment, the UE may indicate, to the NW, that it has not previously used the capability filter.

In an example embodiment, when the UE connects to the network, it may indicate during the connection setup/resume that it does not support the capability filtering. In an example embodiment, this indication may be given as part of RRCSetupComplete, or RRCResumeComplete, or as part of UE capability information message.

In an example embodiment, the gNB may indicate in an inter-node message, to a target gNB, that the UE does not support capability filtering, or that the UE used/did not use capability filter upon providing its capabilities. This may be part of a handover preparation message or a secondary node (SN) addition message or any other inter-node message.

In an example embodiment, the network may decide whether to request any more capabilities from the UE after receiving, from the UE, an indication that it does not support the capability filtering. For example, if the stored filter is there, the NW may avoid asking again, since the UE may not tell the NW anything more. Additionally or alternatively, the network may receive, from the UE, an indication that the UE does not use capability filtering and/or does not use the provided capability filter.

A technical effect of example embodiments of the present disclosure may be to allow the network to decide whether to request any more capabilities or not from the UE afterwards (e.g. if the stored filter is there, the NW may avoid asking again, since the UE may anyway not tell anything more to the NW) .

A technical effect of example embodiments of the present disclosure may be to reduce the signaling load, as the UE capabilities are huge signaling messages.

Example embodiments of the present disclosure may be applicable to RedCap UEs. However, this is not limiting; example embodiments of the present disclosure may also be applicable to other types of UEs.

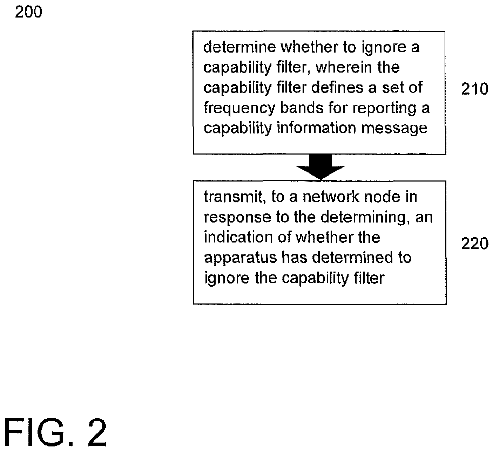

FIG. 2 illustrates the potential steps of an example method 200. The example method 200 may include: determining whether to ignore a capability filter, wherein the capability filter defines a set of frequency bands for reporting a capability information message, 210; and transmitting, to a network node in response to the determining, an indication of whether the apparatus has determined to ignore the capability filter, 220. The example method 200 may be performed, for example, with a UE, a RedCap UE, etc. Ignoring the capability filter may comprise compiling a list of candidate band combinations without reference to filter criteria of the capability filter, or compiling a list of candidate band combinations that is different than the filter criteria of the capability filter. The compiled list of candidate band combinations may contain all or a subset of the bands supported by the apparatus.

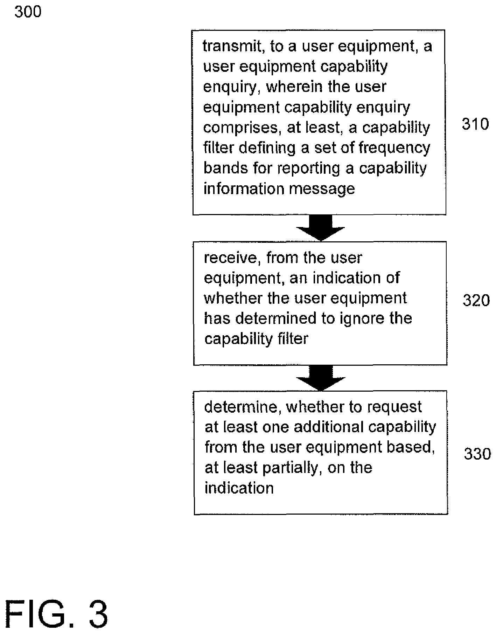

FIG. 3 illustrates the potential steps of an example method 300. The example method 300 may include: transmitting, to a user equipment, a user equipment capability enquiry, wherein the user equipment capability enquiry comprises, at least, a capability filter defining a set of frequency bands for reporting a capability information message, 310; receiving, from the user equipment, an indication of whether the user equipment has determined to ignore the capability filter, 320; and determining, whether to request at least one additional capability from the user equipment based, at least partially, on the indication, 330. The example method 300 may be performed, for example, with a network, base station, network node, eNB, gNB, etc. Ignoring the capability filter may comprise the UE compiling a list of candidate band combinations without reference to filter criteria of the capability filter, or the UE compiling a list of candidate band combinations that is different than the filter criteria of the capability filter. The compiled list of candidate band combinations may contain all or a subset of the bands supported by the UE.

In accordance with one example embodiment, an apparatus may comprise: at least one processor; and at least one memory storing instructions that, when executed by the at least one processor, cause the apparatus at least to: determine whether to ignore a capability filter, wherein the capability filter may define a set of frequency bands for reporting a capability information message; and transmit, to a network node in response to the determining, an indication of whether the apparatus has determined to ignore the capability filter.

The indication may comprise at least one of: an indication that the apparatus has determined to ignore the capability filter, an indication that the apparatus has determined to comply with the capability filter, an indication that the apparatus supports use of the capability filter, an indication that the apparatus does not support use of the capability filter, an indication that the apparatus uses the capability filter, an indication that the apparatus does not use the capability filter, an indication that the apparatus has previously used the capability filter, or an indication that the apparatus has not previously used the capability filter.

The example apparatus may be further configured to: transmit the indication as part of a radio resource control establishment procedure or a radio resource control resume procedure.

The example apparatus may be further configured to: include the indication in a radio resource control setup complete message or a radio resource control resume complete message.

The example apparatus may be further configured to: transmit the indication as at least part of the capability information message.

The example apparatus may be further configured to: in response to receiving a user equipment capability enquiry that specifies the capability filter from the network node, transmit the indication as at least part of the capability information message.

In accordance with one aspect, an example method may be provided comprising: determining, with a user equipment, whether to ignore a capability filter, wherein the capability filter may define a set of frequency bands for reporting a capability information message; and transmitting, to a network node in response to the determining, an indication of whether the user equipment has determined to ignore the capability filter.

The indication may comprise at least one of: an indication that the user equipment has determined to ignore the capability filter, an indication that the user equipment has determined to comply with the capability filter, an indication that the user equipment supports use of the capability filter, an indication that the user equipment does not support use of the capability filter, an indication that the user equipment uses the capability filter, an indication that the user equipment does not use the capability filter, an indication that the user equipment has previously used the capability filter, or an indication that the user equipment has not previously used the capability filter.

The example method may further comprise: transmitting the indication as part of a radio resource control establishment procedure or a radio resource control resume procedure.

The example method may further comprise: including the indication in a radio resource control setup complete message or a radio resource control resume complete message.

The example method may further comprise: transmitting the indication as at least part of the capability information message.

The example method may further comprise: in response to receiving a user equipment capability enquiry that specifies the capability filter from the network node, transmitting the indication as at least part of the capability information message.

In accordance with one example embodiment, an apparatus may comprise: circuitry configured to perform: determining whether to ignore a capability filter, wherein the capability filter may define a set of frequency bands for reporting a capability information message; and circuitry configured to perform: transmitting, to a network node in response to the determining, an indication of whether a user equipment has determined to ignore the capability filter.

In accordance with one example embodiment, an apparatus may comprise: processing circuitry; memory circuitry including computer program code, the memory circuitry and the computer program code configured to, with the processing circuitry, enable the apparatus to: determine whether to ignore a capability filter, wherein the capability filter may define a set of frequency bands for reporting a capability information message; and transmit, to a network node in response to the determining, an indication of whether the apparatus has determined to ignore the capability filter.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for: determining whether to ignore a capability filter, wherein the capability filter may define a set of frequency bands for reporting a capability information message; and transmitting, to a network node in response to the determining, an indication of whether the apparatus has determined to ignore the capability filter.

The indication may comprise at least one of: an indication that the apparatus has determined to ignore the capability filter, an indication that the apparatus has determined to comply with the capability filter, an indication that the apparatus supports use of the capability filter, an indication that the apparatus does not support use of the capability filter, an indication that the apparatus uses the capability filter, an indication that the apparatus does not use the capability filter, an indication that the apparatus has previously used the capability filter, or an indication that the apparatus has not previously used the capability filter.

The means may be further configured for: transmitting the indication as part of a radio resource control establishment procedure or a radio resource control resume procedure.

The means may be further configured for: including the indication in a radio resource control setup complete message or a radio resource control resume complete message.

The means may be further configured for: transmitting the indication as at least part of the capability information message.

The means may be further configured for: in response to receiving a user equipment capability enquiry that specifies the capability filter from the network node, transmitting the indication as at least part of the capability information message.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: determine whether to ignore a capability filter, wherein the capability filter may define a set of frequency bands for reporting a capability information message; and cause transmitting, with a user equipment to a network node in response to the determining, an indication of whether the user equipment has determined to ignore the capability filter.

In accordance with one example embodiment, a non-transitory computer-readable medium comprising program instructions stored thereon for performing at least the following: determining whether to ignore a capability filter, wherein the capability filter may define a set of frequency bands for reporting a capability information message; and causing transmitting, with a user equipment to a network node in response to the determining, an indication of whether the user equipment has determined to ignore the capability filter.

In accordance with another example embodiment, a non-transitory program storage device readable by a machine may be provided, tangibly embodying instructions executable by the machine for performing operations, the operations comprising: determining whether to ignore a capability filter, wherein the capability filter may define a set of frequency bands for reporting a capability information message; and causing transmitting, with a user equipment to a network node in response to the determining, an indication of whether the user equipment has determined to ignore the capability filter.

In accordance with another example embodiment, a non-transitory computer-readable medium comprising instructions that, when executed by an apparatus, cause the apparatus to perform at least the following: determining whether to ignore a capability filter, wherein the capability filter may define a set of frequency bands for reporting a capability information message; and causing transmitting, with a user equipment to a network node in response to the determining, an indication of whether the user equipment has determined to ignore the capability filter.

A computer implemented system comprising: at least one processor and at least one non-transitory memory storing instructions that, when executed by the at least one processor, cause the system at least to perform: determining whether to ignore a capability filter, wherein the capability filter may define a set of frequency bands for reporting a capability information message; and causing transmitting, with a user equipment to a network node in response to the determining, an indication of whether the user equipment has determined to ignore the capability filter.

A computer implemented system comprising: means for determining whether to ignore a capability filter, wherein the capability filter may define a set of frequency bands for reporting a capability information message; and means for causing transmitting, with a user equipment to a network node in response to the determining, an indication of whether the user equipment has determined to ignore the capability filter.

In accordance with one example embodiment, an apparatus may comprise: at least one processor; and at least one memory storing instructions that, when executed by the at least one processor, cause the apparatus at least to: transmit, to a user equipment, a user equipment capability enquiry, wherein the user equipment capability enquiry may comprise, at least, a capability filter defining a set of frequency bands for reporting a capability information message; receive, from the user equipment, an indication of whether the user equipment has determined to ignore the capability filter; and determine, whether to request at least one additional capability from the user equipment based, at least partially, on the indication.

The indication may comprise at least one of: an indication that the user equipment has determined to ignore the capability filter, an indication that the user equipment has determined to comply with the capability filter, an indication that the user equipment supports use of the capability filter, an indication that the user equipment does not support use of the capability filter, an indication that the user equipment uses the capability filter, an indication that the user equipment does not use the capability filter, an indication that the user equipment has previously used the capability filter, or an indication that the user equipment has not previously used the capability filter.

The example apparatus may be further configured to: receive the indication as part of a radio resource control establishment procedure or a radio resource control resume procedure.

The example apparatus may be further configured to: receive the indication as part of a radio resource control setup complete message or a radio resource control resume complete message.

The example apparatus may be further configured to: receive the indication as at least part of the capability information message.

The example apparatus may be further configured to: transmit, to a network node, information about the indication as at least part of handover preparation.

In accordance with one aspect, an example method may be provided comprising: transmitting, with a base station to a user equipment, a user equipment capability enquiry, wherein the user equipment capability enquiry may comprise, at least, a capability filter defining a set of frequency bands for reporting a capability information message; receiving, from the user equipment, an indication of whether the user equipment has determined to ignore the capability filter; and determining, whether to request at least one additional capability from the user equipment based, at least partially, on the indication.

The indication may comprise at least one of: an indication that the user equipment has determined to ignore the capability filter, an indication that the user equipment has determined to comply with the capability filter, an indication that the user equipment supports use of the capability filter, an indication that the user equipment does not support use of the capability filter, an indication that the user equipment uses the capability filter, an indication that the user equipment does not use the capability filter, an indication that the user equipment has previously used the capability filter, or an indication that the user equipment has not previously used the capability filter.

The example method may further comprise: receiving the indication as part of a radio resource control establishment procedure or a radio resource control resume procedure.

The example method may further comprise: receiving the indication as part of a radio resource control setup complete message or a radio resource control resume complete message.

The example method may further comprise: receiving the indication as at least part of the capability information message.

The example method may further comprise: transmitting, to a network node, information about the indication as at least part of handover preparation.

In accordance with one example embodiment, an apparatus may comprise: circuitry configured to perform: transmitting, to a user equipment, a user equipment capability enquiry, wherein the user equipment capability enquiry may comprise, at least, a capability filter defining a set of frequency bands for reporting a capability information message; circuitry configured to perform: receiving, from the user equipment, an indication of whether the user equipment has determined to ignore the capability filter; and circuitry configured to perform: determining, whether to request at least one additional capability from the user equipment based, at least partially, on the indication.

In accordance with one example embodiment, an apparatus may comprise: processing circuitry; memory circuitry including computer program code, the memory circuitry and the computer program code configured to, with the processing circuitry, enable the apparatus to: transmit, to a user equipment, a user equipment capability enquiry, wherein the user equipment capability enquiry may comprise, at least, a capability filter defining a set of frequency bands for reporting a capability information message; receive, from the user equipment, an indication of whether the user equipment has determined to ignore the capability filter; and determine, whether to request at least one additional capability from the user equipment based, at least partially, on the indication.

In accordance with one example embodiment, an apparatus may comprise means for: transmitting, to a user equipment, a user equipment capability enquiry, wherein the user equipment capability enquiry may comprise, at least, a capability filter defining a set of frequency bands for reporting a capability information message; receiving, from the user equipment, an indication of whether the user equipment has determined to ignore the capability filter; and determining, whether to request at least one additional capability from the user equipment based, at least partially, on the indication.

The indication may comprise at least one of: an indication that the user equipment has determined to ignore the capability filter, an indication that the user equipment has determined to comply with the capability filter, an indication that the user equipment supports use of the capability filter, an indication that the user equipment does not support use of the capability filter, an indication that the user equipment uses the capability filter, an indication that the user equipment does not use the capability filter, an indication that the user equipment has previously used the capability filter, or an indication that the user equipment has not previously used the capability filter.

The means may be further configured for: receiving the indication as part of a radio resource control establishment procedure or a radio resource control resume procedure.

The means may be further configured for: receiving the indication as part of a radio resource control setup complete message or a radio resource control resume complete message.

The means may be further configured for: receiving the indication as at least part of the capability information message.

The means may be further configured for: transmitting, to a network node, information about the indication as at least part of handover preparation.

In accordance with one example embodiment, a non-transitory computer-readable medium comprising instructions stored thereon which, when executed with at least one processor, cause the at least one processor to: cause transmitting, to a user equipment, of a user equipment capability enquiry, wherein the user equipment capability enquiry may comprise, at least, a capability filter defining a set of frequency bands for reporting a capability information message; cause receiving, from the user equipment, of an indication of whether the user equipment has determined to ignore the capability filter; and determine, whether to request at least one additional capability from the user equipment based, at least partially, on the indication.

In accordance with one example embodiment, a non-transitory computer-readable medium comprising program instructions stored thereon for performing at least the following: causing transmitting, to a user equipment, of a user equipment capability enquiry, wherein the user equipment capability enquiry may comprise, at least, a capability filter defining a set of frequency bands for reporting a capability information message; causing receiving, from the user equipment, of an indication of whether the user equipment has determined to ignore the capability filter; and determining, whether to request at least one additional capability from the user equipment based, at least partially, on the indication.

In accordance with another example embodiment, a non-transitory program storage device readable by a machine may be provided, tangibly embodying instructions executable by the machine for performing operations, the operations comprising: causing transmitting, to a user equipment, of a user equipment capability enquiry, wherein the user equipment capability enquiry may comprise, at least, a capability filter defining a set of frequency bands for reporting a capability information message; causing receiving, from the user equipment, of an indication of whether the user equipment has determined to ignore the capability filter; and determining, whether to request at least one additional capability from the user equipment based, at least partially, on the indication.

In accordance with another example embodiment, a non-transitory computer-readable medium comprising instructions that, when executed by an apparatus, cause the apparatus to perform at least the following: causing transmitting, to a user equipment, of a user equipment capability enquiry, wherein the user equipment capability enquiry may comprise, at least, a capability filter defining a set of frequency bands for reporting a capability information message; causing receiving, from the user equipment, of an indication of whether the user equipment has determined to ignore the capability filter; and determining, whether to request at least one additional capability from the user equipment based, at least partially, on the indication.

A computer implemented system comprising: at least one processor and at least one non-transitory memory storing instructions that, when executed by the at least one processor, cause the system at least to perform: causing transmitting, to a user equipment, of a user equipment capability enquiry, wherein the user equipment capability enquiry may comprise, at least, a capability filter defining a set of frequency bands for reporting a capability information message; causing receiving, from the user equipment, of an indication of whether the user equipment has determined to ignore the capability filter; and determining, whether to request at least one additional capability from the user equipment based, at least partially, on the indication.

A computer implemented system comprising: means for causing transmitting, to a user equipment, of a user equipment capability enquiry, wherein the user equipment capability enquiry may comprise, at least, a capability filter defining a set of frequency bands for reporting a capability information message; means for causing receiving, from the user equipment, of an indication of whether the user equipment has determined to ignore the capability filter; and means for determining, whether to request at least one additional capability from the user equipment based, at least partially, on the indication.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising means for:
determining whether to ignore a capability filter, wherein the capability filter defines a set of frequency bands for reporting a capability information message; and
transmitting, to a network node in response to the determining, an indication of whether the apparatus has determined to ignore the capability filter.

2. The apparatus of claim 1, wherein the indication comprises at least one of:
an indication that the apparatus has determined to ignore the capability filter,
an indication that the apparatus has determined to comply with the capability filter,
an indication that the apparatus supports use of the capability filter,
an indication that the apparatus does not support use of the capability filter,
an indication that the apparatus uses the capability filter,
an indication that the apparatus does not use the capability filter,
an indication that the apparatus has previously used the capability filter, or
an indication that the apparatus has not previously used the capability filter.

3. The apparatus of claim 1 or 2, wherein the means are further configured for:
transmitting the indication as part of a radio resource control establishment procedure or a radio resource control resume procedure.

4. The apparatus of claim 1 or 2, wherein the means are further configured for:
including the indication in a radio resource control setup complete message or a radio resource control resume complete message.

5. The apparatus of any of claims 1 through 4, wherein the means are further configured for:
transmitting the indication as at least part of the capability information message.

6. The apparatus of any of claims 1 through 4, wherein the means are further configured for:
in response to receiving a user equipment capability enquiry that specifies the capability filter from the network node, transmitting the indication as at least part of the capability information message.

7. An apparatus comprising means for:
transmitting, to a user equipment, a user equipment capability enquiry, wherein the user equipment capability enquiry comprises, at least, a capability filter defining a set of frequency bands for reporting a capability information message;
receiving, from the user equipment, an indication of whether the user equipment has determined to ignore the capability filter; and
determining, whether to request at least one additional capability from the user equipment based, at least partially, on the indication.

8. The apparatus of claim 7, wherein the indication comprises at least one of:
an indication that the user equipment has determined to ignore the capability filter,
an indication that the user equipment has determined to comply with the capability filter,
an indication that the user equipment supports use of the capability filter,
an indication that the user equipment does not support use of the capability filter,
an indication that the user equipment uses the capability filter,
an indication that the user equipment does not use the capability filter,
an indication that the user equipment has previously used the capability filter, or
an indication that the user equipment has not previously used the capability filter.

9. The apparatus of claim 7 or 8, wherein the means are further configured for:
receiving the indication as part of a radio resource control establishment procedure or a radio resource control resume procedure.

10. The apparatus of claim 7 or 8, wherein the means are further configured for:
receiving the indication as part of a radio resource control setup complete message or a radio resource control resume complete message.

11. The apparatus of claim 7 or 8, wherein the means are further configured for:
receiving the indication as at least part of the capability information message.

12. The apparatus of any of claims 7 through 11, wherein the means are further configured for:
transmitting, to a network node, information about the indication as at least part of handover preparation.

13. A method comprising:
determining, with a user equipment, whether to ignore a capability filter, wherein the capability filter defines a set of frequency bands for reporting a capability information message; and
transmitting, to a network node in response to the determining, an indication of whether the user equipment has determined to ignore the capability filter.

14. A method comprising:
transmitting, with a base station to a user equipment, a user equipment capability enquiry, wherein the user equipment capability enquiry comprises, at least, a capability filter defining a set of frequency bands for reporting a capability information message;
receiving, from the user equipment, an indication of whether the user equipment has determined to ignore the capability filter; and
determining, whether to request at least one additional capability from the user equipment based, at least partially, on the indication.

15. A non-transitory computer-readable medium comprising program instructions stored thereon for performing at least the following:
determining whether to ignore a capability filter, wherein the capability filter defines a set of frequency bands for reporting a capability information message; and
causing transmitting, with a user equipment to a network node in response to the determining, an indication of whether the user equipment has determined to ignore the capability filter.
